## Europäisches Patentamt

## European Patent Office

## Office européen des brevets

(19)

(11) Publication number: **0 012 165**
**A1**

(12)

# EUROPEAN PATENT APPLICATION

(21) Application number: **79103835.9**

(22) Date of filing: **08.10.79**

(51) Int. Cl.³: **A 61 B 10/00,** G 01 N 29/00,
G 01 S 15/02

(30) Priority: **18.12.78 US 970667**

(43) Date of publication of application: **25.06.80**
**Bulletin 80/13**

(84) Designated Contracting States: **CH DE FR GB NL SE**

(71) Applicant: **PICKER CORPORATION, 595 Miner Road,**
**Cleveland, Ohio 44143 (US)**

(72) Inventor: **Bernardi, Richard B., 101 Patton Drive,**
**Cheshire Connecticut 06410 (US)**
Inventor: **Adams, Darwin P., 680 Tanner Marsh Road,**
**Guilford Connecticut 06472 (US)**

(74) Representative: **Baillie, Iain C. et al, c/o Ladas, Parry,**
**Von Gehr Goldsmith & Deschamps Blumenstrasse 48,**
**D-8000 München 2 (DE)**

(54) **Method and system for ultrasonic examination.**

(57) The system includes a variable aperture transducer unit having a linear array of ultrasonic transducer elements, which are subdivided into groups. Each group of transducer elements, during echo reception, defines a distance dependent reception sensitivity pattern having a near field and a far field which meet in a transition zone. Reception resolution is best in the transition zone. The distance of the transition zone from the transducer unit is a function of the size of the variable aperture, which size is defined by the number of transducer elements applied for reception at a given time. To take advantage of this phenomenon, the system also includes dynamic aperture control circuitry for expanding the transducer unit aperture with time during echo reception by successively adding adjacent transducer elements to the receiving group causing the high resolution transition reception zone to recede into the subject generally coincident with an ultrasonic energy burst.

- 1 -

## Method and System for Ultrasonic Examination

This invention relates to a method and system for ultrasonic examination.

Such systems have been applied in several areas of diagnostic medicine. In particular, real time cross-sectional images of internal body structure can be obtained by the use of electronically scanned linear transducer arrays for propagating ultrasonic energy into a patient and detecting and processing resulting echoes from within his body.

Such systems incorporate a transducer unit consisting of a linear array of small rectangular ultrasonic transducer elements. The elements are arranged in a row with substantially coplanar emission faces and parallel axes of radiation. Pulser circuitry is provided to actuate the transducer elements to produce incident ultrasonic energy in a predetermined sequence. The sequence is such that the array emits a succession of ultrasonic energy bursts along each of a succession of parallel transmission paths extending outwardly from different locations along the array. In this manner, the transducer array is caused to "scan" the patient with ultrasonic energy.

Such a real time ultrasonic system can produce two dimensional images of internal subject structure. One coordinate of each image point is provided by the location of the propagation path of the resultant ultrasonic energy burst. The other coordinate is provided by information derived from the time lapse between the production of the ultrasonic burst and the return of corresponding ultrasonic echoes from interfaces between areas of body tissues having differing accoustical impedance characteristics.

In some systems, the transducers are individually pulsed sequentially along the length of the array to scan an image. A more advanced technique teaches pulsing of groups of elements substantially simultaneously, in a phase delayed relation, to produce a more sharply focused ultrasonic beam for each pulse-echo acoustic line.

Ultrasonic energy travels outwardly from a transducer in a beam configuration having a particular geometry which is related to the shape of the transducer. With a flat transducer, that geometry consists of a generally nondivergent portion, relatively near the transducer and called the "near field," and a more divergent portion of the beam extending outwardly from the outer extremity of the near field, which is called the "far field." The near and far fields meet in a so called "transition" zone.

This phenomenon is also analogously applicable with respect to ultrasonic echoes from within the subject returning to the transducer for reception.

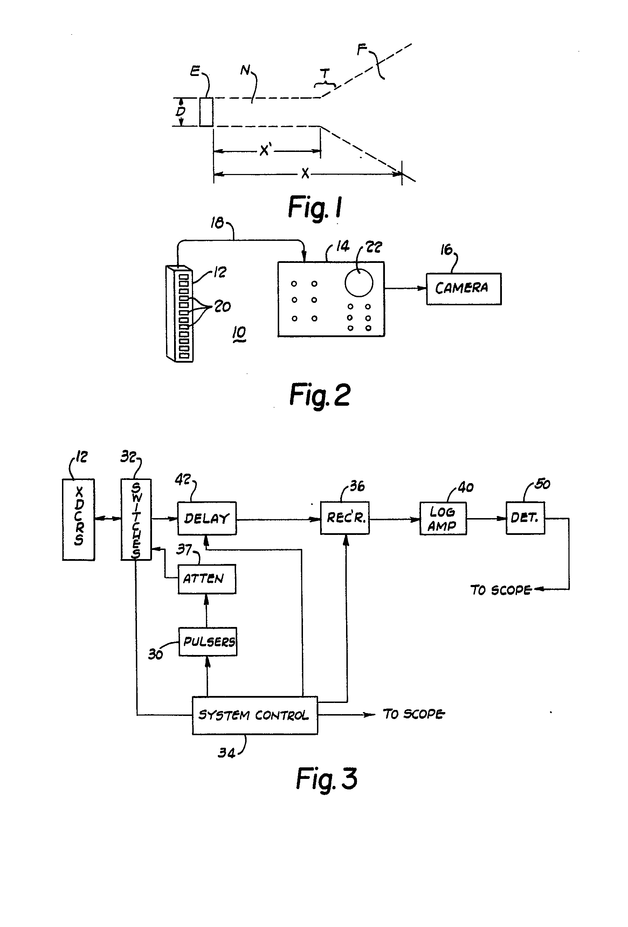

The transmission and reception geometry is illustrated graphically in Figure 1. A transducer element E has a longitudinal dimension D. When actuated, the element E produces an incident ultrasonic beam having a geometrical configuration, generally illustrated by the broken lines, including a near field N and a far field F. In the near field, the beam is relatively nondivergent. The near and far fields meet in the transition zone T, centered at a distance X' from the element E.

The geometry shown in FIG. 1 applies, as mentioned, not only to incident ultrasonic energy produced by the transducer element E, but also describes the distance related reception sensitivity pattern of the element E to ultrasonic echoes returning from within the patient's body. Echoes produced within the far field F are received less efficiently than those produced in the region of the transition zone T.

Mathmetical anaylsis shows that the transducer dimension D, the wavelength L of the ultrasonic energy and the distance X' from the transducer emitting face to the transition between near and far fields are related by the following equation: $X' = \dfrac{D^2}{4L}$.

In the system proposed in the referenced application the incident ultrasonic bursts are focused at a predetermined distance from the transducer array by delay phasing techniques implemented by precise timing of the actuation of the members of each group of transducers. In addition, the reception characteristics of each receiving group of transducers is focused by relatively delaying echo-responsive signals from the individual elements of each receiving group according to a time variable relationship, such that the area of maximum receiving sensitivity tracks the energy burst outwardly into the patient's body. This technique enhances the reception characteristics of the ultrasonic system by continuously maintaining its area of maximum receiving sensitivity in the time-varying region of the patient's body from which ultrasonic echoes are being obtained. The number of elements in each group remains constant during the reception period, reception focusing being accomplished by the delay techniques.

While this technique is quite successful in accomplishing its goals, it necessitates the employment of relatively complex multichannel electronics (one channel for each receiving transducer element) to accomplish the variable delay phasing of the received signals. Such delay phasing electronics includes a set of variable delay charge coupled devices, one for each channel, along with associated programmable circuitry to provide a program of clocking signals to accomplish the desired variable delay patterns. The use of such complicated electronics enhances the cost and complexity of the equipment.

According to another proposal, there has been an attempt at accomplishing some of the advantages of electronic focusing without the use of multichannel variable reception delay electronics as in the previously described proposal. In accordance with this second proposal, an expanding aperture annular transducer array has been suggested.

In this expanding aperture proposal, the size the aperture is increased in proportion to the desired focal length of the system.

- 4 -

This approach is said to allow the use of larger area array elements, thus increasing the sensitivity of the system. The approach is also said to maintain a constant F-number aperture.

This second proposal fails to show or suggest the use of an expanding aperture in other than an annular transducer array which propagates energy along only a single central axis. It is thus inapplicable to real time electronically scanned ultrasonic investigatory systems and methods.

The present invention provides a simplified, yet effective dynamic focusing technique without the use of multichannel variable delay electronics previously required for effective focusing. This invention (1) recognizes that an optimum resolution region exists at the transition zone between near and far fields, and (2) provides a simplified system and method, useable in real time electronically scanned ultrasonic systems, for continuously positioning the region of maximum reception resolution coincident with the location within the subject from which ultrasonic echoes are being instantaneously generated by receding incident energy.

More specifically, the number of active elements in each receiving transducer grouping is increased during the reception of echoes in such a way that the transition zone between the near and far fields of the reception pattern of the active receiving transducer unit always lies as close as possible to the instantaneous zone within the patient from which echoes are currently being produced.

An ultrasonic examination system embodying the present invention includes a multielement transducer array and pulser circuitry coupled to the array for firing an incident ultrasonic burst into a subject. Control circuitry is included for applying selected elements of the transducer array to receive ultrasonic echoes from the incident bursts in a receive mode. The transducer elements applied for reception define a reception pattern having a near and a far field which meet at a transition zone. The location of the transition zone is a function of the number of transducer elements applied for receiving. The system also includes imaging and display means coupled to the transducer array and responsive to received ultrasonic echoes for producing a visual representation of internal structure of the subject. The system further comprises dynamic aperture control circuitry associated with the imaging and control circuitry for varying, during the receive mode, the number of transducer elements which are receiving echoes, for causing the transition zone defined by the overall length of the receiving group to recede into the subject at approximately the acoustic velocity of the incident ultrasonic energy.

In accordance with a more specific aspect of the invention, the dynamic aperture control circuitry comprises delay and system control circuitry for varying the number of applied receiving elements at a rate and timing for causing the transition zone to recede into the subject substantially coincident with a wave-front of a corresponding incident burst being tracked.

In accordance with another aspect of the invention, an ultrasonic examination system embodying the invention includes a variable aperture ultrasonic transducer unit for directing an incident burst of ultrasonic energy into a subject and for detecting ultrasonic echoes caused by the incident burst. The system also includes circuitry for adjusting the variable aperture of the transducer unit during reception of ultrasonic echoes to maintain the transition zone between the near and far fields of the reception pattern of the transducer unit substantially coincident with the recession of incident ultrasonic energy into the subject, and imaging and display circuitry for employing received ultrasonic echoes for producing a visual representation of internal subject structure.

A more specific embodiment of an ultrasonic examination system provided by this invention includes an ultrasonic transducer unit comprising a linear array of ultrasonic transducer elements. Pulser circuitry actuates a sequence of the transducer elements for firing bursts of ultrasonic energy transversely from the linear array into a subject from different locations along the array. Control and switching circuitry applies groups of adjacent linearly disposed transducers to receive echoes produced by corresponding incident bursts. Each of these selected element groups defines a reception pattern having a near field and a far field, the fields meeting at a transition zone characterized by maximum receiving resolution. The location of the transition zone is a function of the cumulative longitudinal dimension of the transducer elements constituting the receiving group. The system also includes dynamic aperture control circuitry for varying with time the longitudinal dimension of each receiving group of transducer elements during its operation in the receive mode for causing the transition region to substantially track recession of corresponding incident ultrasonic energy into the subject. Finally, this system includes display apparatus and imaging circuitry coupled to the array and responsive to received echoes for producing a visual representation of internal structure of the subject.

More specifically, the dynamic aperture control circuitry of the inventive system includes delay and system control circuitry for expanding the longitudinal dimension of each receiving transducer element group during the recession of the corresponding incident burst by successively adding adjacent transducer elements to the receiving group during its operation in the receive mode.

Another more specific aspect of the invention includes the dynamic aperture control circuitry having circuitry for adding the adjacent transducer elements to the receiving group at a rate which approximately maintains the effective length of the receiving group of transducer elements at a value represented by the expression $2 \ x\sqrt{XL}$, where L is the wavelength of the ultrasonic energy in the subject, and X is the instantaneous distance from the transducer array of a wavefront of a corresponding receding incident burst.

In the drawings:

FIGURE 1 is a graphical illustration of ultrasonic beam geometry;

FIGURE 2 is a graphical illustration of an ultrasonic system;

FIGURE 3 is a block diagram illustrating in more detail a portion of the system shown in FIGURE 2;

FIGURE 4 is a detailed block diagram illustrating a portion of the system of FIGURE 2;

FIGURE 5 is an illustration showing graphically an aspect of operation of the system of FIGURE 2;

FIGURE 6 is a graphical illustration showing an aspect of the operation of the circuitry of FIGURES 2 and 4;

FIGURE 7 is a timing chart showing another aspect of operation of the system of FIGURE 2;

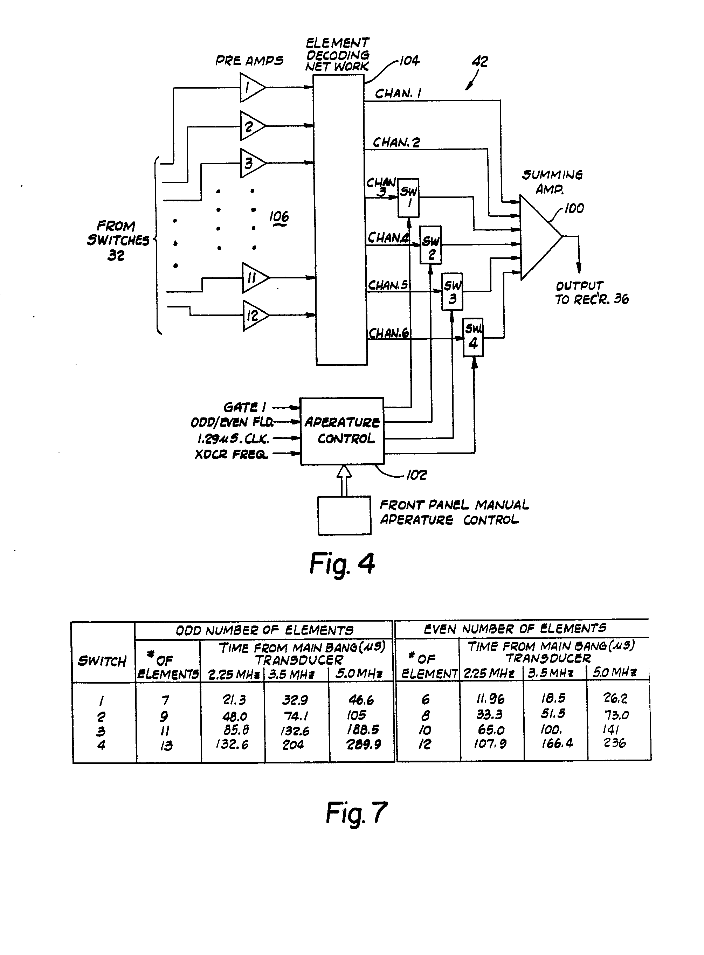

FIGURE 3 is a schematic drawing illustrating a portion of the circuitry shown in FIGURE 4.

FIGURE 2 generally depicts a real time electronically scanned ultrasonic imaging system 10 in which the dynamic aperture control is incorporated. The system 10 propagates sequences of spaced incident ultrasonic energy bursts into a subject, such as a human patient, and produces substantially instantaneous images of internal body structure of the patient from ultrasonic echoes caused by the sequences of incident ultrasonic bursts.

The system 10 includes an ultrasonic transducer unit 12 for propagating the ultrasonic energy and receiving the echoes, imaging and display circuitry 14 for producing the real time images, and a recording device, such as a photographic camera 16, for viewing the display apparatus output to record the images. The ultrasonic transducer unit 12 is coupled to the imaging and display portion 14 of the system by a multi-lead electrical cable 18.

The transducer unit 12, of known design, includes a large number of individual rectangular transducer elements such as 20, maintained in a side-by-side substantially linear array. A suitable transducer unit has a row of 68 such individual transducer elements. The transducer elements have mutually coplanar ultrasonic energy emitting surfaces.

In operation, the transducer unit 12 is stationarily positioned against a portion of a patient's body, with accoustical coupling being enhanced by the use of a gelatinous medium between the transducer emitting faces and the patient's body.

Each of the transducer elements comprises a piezoelectric device. Each is individually coupled electrically to the imaging and display circuitry 14 by leads within the cable 18. In this way, transducer elements can be individually actuated, and signals produced by ultrasonic echoes sensed by individual transducer elements can be separately processed by the imaging and display apparatus and circuitry 14.

The display apparatus of the imaging and display portion 14 suitably comprises a cathode ray oscilloscope having an output screen generally indicated at 22. Optionally, a scan converter (not shown) can be coupled to the imaging portion 14 Video recording apparatus can in that case also be optionally coupled to receive the output of the scan converter.

In operation, the transducer elements propagate a succession of substantially parallel bursts of ultrasonic energy, along respective spaced transmission paths. To accomplish this, a sequence of different transducer element groups is cyclically excited. The information from each group is used to form a pulse-echo "acoustic line" of an acoustically derived image frame. A sequential pattern of resultant spaced parallel propagating incident acoustic bursts is thus produced. The grouped elements produce resultant energy bursts of a high frequency (about 1 MHz.-10MHz).

Echo signals reflected from internal interfaces in the patient's body, between tissues of differing acoustical impedance characteristics, are sensed by transducer elements. The imaging circuitry, in response, actuates the display apparatus to produce appropriate visual displays of internal structure of the patient's body as represented by information borne by the echoes describing tissue interfaces.

The imaging electronics of the portion 14 are illustrated in block form in FIGURE 3, as operatively associated with the transducer unit 12. Control, pulser and switching circuitry 34, 30, 32 associated with the imaging electronics controls firing of the transducer elements, and the imaging circuitry processes the signals produced by the transducer elements in response to sensed ultrasonic echoes. The processed signals are then directed to circuitry associated with the display apparatus to produce a visual display of the patient's internal body structure. Each of the sequence of acoustically derived image frames consists of two mutually interlaced fields of acoustic lines. Each interlaced field includes 60 acoustic lines. Each acoustic line is produced in response to echoes from one acoustic energy burst.

In firing the transducer elements to produce the incident ultrasonic bursts in a "transmit mode," the control, pulser and switching circuitry fire each of a sequence of element groups in a phased relationship. The phasing is executed in known fashion such that the incident burst resulting from the firing of the group is focused at a predetermined fixed focal distance from the linera transducer element array. A suitable focal distance lies between the maximum and minimum depths within the subject which are sought to be examined, slightly closer to the minimum than to the maximum. In practice, the fixed focal distance is often between three and ten centimeters. In a preferred embodiment, the incident ultrasonic bursts are generated respectively by groups of approximately five adjacent transducer elements.

In the receive mode of a preferred embodiment, the switching circuitry 32 couples a group of as many as 13 transducer elements to the downstream imaging circuitry, so that the signals from these 13 receiving elements can be processed as described in detail below to provide information describing an acoustic line of an acoustically derived image field. The group of 13 receiving elements is generally centered about the center of the group of approximately five elements which were used to produce the corresponding acoustic burst.

Delay coupling circuitry 42 is provided between the switching circuitry 32 and the downstream imaging circuitry. At the outset of the receive mode period for the receive element group, the delay coupling circuitry is controlled to couple only a predetermined relatively small, subgroup of the total transducer element group to the downstream imaging circuitry, so that the echo-responsive signals from only the subgroup of elements is processed during the initial stage of the receive period. Through the course of the receive period, however, the delay coupling circuitry increases the number among the elements which are included in the subgroup and coupled to the downstream imaging circuitry. In a preferred embodiment, the initial number of elements which are coupled is a subgroup of four or five elements. The number of elements of the subgroup of the 13 element group so coupled is increased during the receive period by a succession of additional increments of two elements each. Each of the added elements, when coupled, are adjacent on each side to those elements earlier coupled during the current receive mode period. In accordance with the preferred embodiment, the maximum number of elements which are coupled by the end of the receive mode period is either 12 or 13 elements for the 13 element example cited.

By cylically repeating this transmit-receive operation at

- 10 -

about 30Hz for each of a succession of different resultant spaced
incident bursts, a series of substantially instantaneous ultrasonically derived image frames can be produced for sequential display on a cathode ray tube display apparatus. Such a display provides a "motion picture" presentation of internal condition of the
subject.

The cyclical transmit-receive scanning method of creating
ultrasonic images is known to those of ordinary skill in this art,
as evidenced by embodiment of the described technique and apparatus
in a Linear Scanner, Model No. 595112, manufactured by the applicant.

During the receive mode, the incremental transducer elements added to the subgroup are added at a rate which maintains the
near/far field transition location as close as possible to the location of the corresponding receiving incident burst. In this way,
the transition zone, which affords maximum reception resolution, is
maintained substantially coincident with the current region within
the subject from which ultrasonic echoes are obtained. This process
is explained in more detail below.

The set of pulsers 30, (SEE FIGURE 3) for firing trans-
ducer elements to which they are iteratively coupled, is associated
with the imaging circuitry. The transducer elements are coupled to
the pulsers by known switching circuitry 32. Each of the pulsers
produces bursts of electrical energy which are directed by the switching circuitry to actuate a coupled transducer element which converts
the electrical energy to bursts of ultrasonic energy incident into
the patient's body along a transmission path extending outwardly
from the transducer unit.

The system control circuitry 34 controls operation of the
switching circuitry 32, portions of the imaging electronics, and
other components of the system 10. In transmit mode, the system
control circuitry fires the individual members of the group of approximately five transducer elements according to known phased
delay timing relationship which causes the focusing of the resultant
ultrasonic bursts at a fixed transmission focal distance from the
linera transducer array. The transmission focal distance may suitably be varied from approximately 3-10 centimeters.

The pulsers 30 operate at a low-duty cycle. The pulsers are caused by the system control circuitry 34 to produce intermittent bursts of energy and then to remain inactive during the
receiving mode between energy burst production. This allows for
the ultrasonic echoes produced by the incident ultrasonic energy
to return to transducer elements, by which they are converted to
electrical signals. The delay circuitry 42, as noted above, controls which of the echo-representing signals from the switching
circuitry are passed along to the remainder of the imaging circuitry, and combines the signals which are so passed. Those signals which are passed along are in turn processed by single channel
receiver circuitry 36, and then by other portions of the remainder
of the system 10.

Known attenuator circuitry 37 affords adjustability
to the power applied to the transducer elements by the pulsers.

Electrical signals from the receiver circuitry 36 are
directed through a single channel logarithmic amplifier 40 (which
can optionally be by-passed) whose function is to compress the
signal information to improve azimuthal resolution of images the
system generates.

Known time gain compensation circuitry is associated with
the receiver circuitry. In time gain compensation, the gain of the
receiver circuitry is increased with time during the receiving mode,
so that ultrasonic echoes more distantly generated are relatively
amplified, with respect to ultrasonic echoes less distantly generated.
This feature compensates for the loss of amplitude which results because of increasing depth of echo origin within the patient's body.

In accordance with the preferred embodiment, the timing of
the addition to a receiving subgroup of each of the incremental trans-
ducer element pairs is important to optimize the aperture, (i.e.,
the longitudinal dimension along the transducer array defined by
the adjacent subgroup of transducer elements which are currently receiving). Optomization is caused by adding the transducer elements
in a sequence timed such that the total aperture of the group is approximately equal to the value of the expression $2\sqrt{XL}$, where X is
the instantaneous distance from the transducer to which the corresponding incident energy burst has propagated and L is the acoustic wave length of the ultrasonic energy in the subject.

12 -

This technique describes a simple but effective dynamic focusing method without the use of complex variable delay receiving circuitry such as described in the above incorporated application. In particular, the number of selected elements is changed during reception of echoes in such a way that the near/far transition distance X' always lies as close as possible to the region from which echoes are currently being obtained within the patient. Of course, the accuracy with which the transition distance X' can be positioned during the progress of the receiving mode depends upon the value of the ultrasonic wave length L, the spacing between adjacent transducer elements, and the total number of transducer elements employed during the array.

In accordance with the preferred embodiment, the transducer array consists of 72 transducer elements, with rectangular emitting faces, their center to center adjacent spacing being approximately 1.5 mm.

The proper timing of the addition of elements to each receiving group is derived from the recognition, as stated above, that the zone of maximum resolution lies at the near/far field transition distance of the ultrasonic beam reception pattern. The mathematical derivation of the optimum aperture size is obtained by the following analysis, based on the equations discussed above in connection with the prior art and inventive field.

The beam width W at some distance X, beyond X', is approximately: $W = \dfrac{DX}{X'}$, $X \geq X'$. Since $X' = D^2/4L$ by algebraic substitution, the following relationships can be obtained:

$$W = 2\sqrt{X'L}\left(\frac{X}{X'}\right) \; ; \; X \geq X'.$$

If less than X', the beam width W is approximately equal to the dimension D, i.e., the "aperture" size, of the transducer element E:

$$W = D = 2\sqrt{X L}\left(\frac{X'}{X}\right).$$

For some fixed range X, the beam width varies as follows:

$W = K\sqrt{X/X'}$ , $X \geq X'$

$W = K\sqrt{X'/X}$ , $X < X'$ where

$K = 2\sqrt{XL}$

These equations show that the smallest beam width with respect to a range X is obtained when the distance X' lies at X. The best resolution, then, is obtained when X' = X. The optimum aperture D, therefore, is equal to 2 $(XL)^{1/2}$.

Returning to system operation, the signal from the log amplifier is directed as an input to a known type of detection amplifier 50 whose function is to rectify the RF input. The output of the detection amplifier is presented as an input to the cathode ray oscilloscope, to control in known fashion the amplitude of the CRT trace which is used to define the ultrasonically derived images of the internal body structure of the patient.

The system control circuitry 34 also provides signals for controlling operation of the CRT oscilloscope display. Specifically, the system control circuit actuates oscilloscope deflection plates to position the oscilloscope trace at a location on one axis corresponding to the location of the resultant path of the particular incident ultrasonic burst currently generated and/or having its echoes received and processed. Moreover, the system control circuitry initiates the oscilloscope trace, on the other axis, synchronous relative to the initiation of the corresponding ultrasonic incident burst. This involves a further known technique and apparatus embodied in the above-referenced Linear Scanner Model 595112. The referenced Linear Scanner also embodies components analogous to the presently described pulsers, attenuators, receiver, and logarithmic amplifier.

The delay circuitry 42 and its operation to dynamically control the receiving aperture size during receive mode is illustrated in more detail in FIGURES 4-8.

Figure 4 illustrates in block form the delay circuitry 42 employed in dynamically controlling the aperture size of the transducer array. The output of the delay circuitry constitutes the output of a summing amplifier 100, which output is transmitted as the input to the receiver circuitry 36. The summing amplifier 100 sums six input channels. As shown in FIG. 4, channels 1 and 2 are continuously applied as inputs to the amplifier 100. Channels 3, 4, 5 and 6, however, are not continuously connected as inputs. Rather, the input of each of channels 3 through 6 to the amplifier 100 is controlled by the respective states of a series of switches

- 14 -

SW1, SW2, SW3, SW4. Closure of the switches SW1 through SW 4 is accomplished in a timed sequence by aperture control circuitry 102, whose operation is discussed in more detail below.

A decoding network 104 receives inputs from each of a variable set of 13 ultrasonic transducers, and couples combinations of these 13 outputs together to constitute the six channels which are output from the decoding network 104 to the summing amplifier 100 and the switches SW1-SW4, respectively. The system control circuitry 34 varies the decoding network 104 between various states. These states are a function of acoustic line number as well as whether an odd or even field is employed. These various states within the decoding network combine the 12 input signals in groups about the centerline of the acoustic beam.

Before presentation as inputs to the decoding network 104, each of the 13 transducer element outputs is passed through one of a set 106 of preamplifiers having a gain of approximately 20db.

The transducer element output signals which are input to the set of preamplifiers 106 constitute the outputs from the switching circuitry 32, which has been described above as coupling successive sequences of sets of 13 elements each to the preamps.

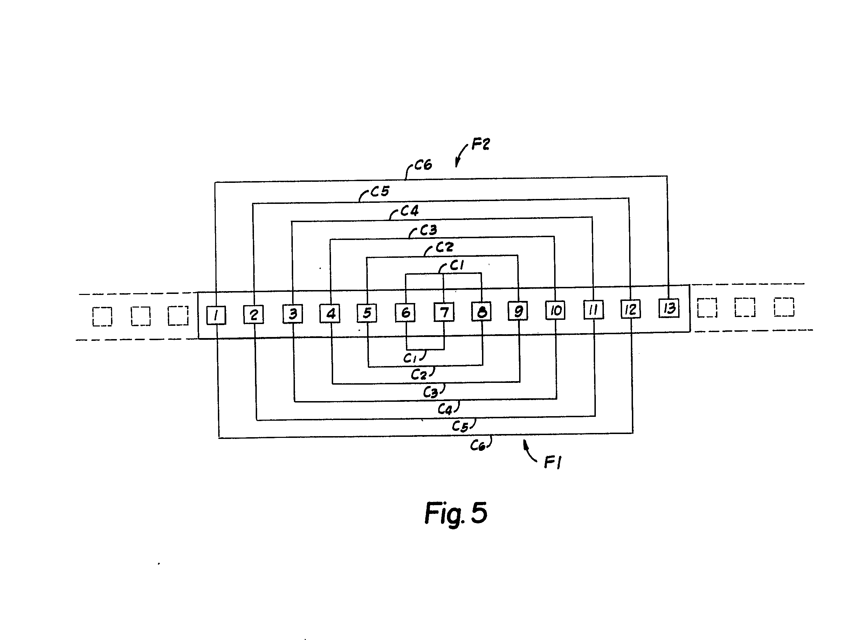

The manner in which the decoding network 104 combines the transducer element outputs into channels in the first and second fields, F1, F2, is graphically illustrated in FIG. 5.

In FIG. 5, the 13 transducer element outputs in the receiving group selected during a receive mode period by the switching circuitry 32 are arbitrarily numbered 1-13, left to right as shown in FIG. 5. The central element of the set whose output is considered is designated element no. 7.

In the first interlaced field F1, the decoding network 1 4 combines elements 6 and 7 into channel 1. Each channel in FIG. 5 is indicated by the prefix "C" followed by the numerical designation of the channel. Channel 2 constitutes elements 5, 8, and channel 8 constitutes elements 4, 9. Channel 4 constitutes elements 3, 10; channel 5 constitutes elements 2, 11, and channel 6 constitutes elements 1, 12. In the second interlaced field F1, the element decoding network 104 combines the three elements 6, 7, 8 together into channel 1.  Channel 2 constitutes elements 5, 9; channel 3 constitutes elements 4, 10; channel 4 constitutes elements 3, 7; channel 5 constitutes elements 2, 12; and channel 6 constitutes elements 1, 13.

During a receive mode period, channels 1 and 2 are active- ly coupled as inputs to the summing amplifier 100, during the initial portion of the receive mode period.  Switches SW1-SW 4 are then successively additively closed during the remainder of the receive mode period.  As can be readily deduced from the previous discussion, in generating the field F1, four elements (5-8) are coupled to the summing amplifier during the initial portion of the receive mode.  During a second portion, six elements are coupled; during the succeeding portions of the receive mode, additional pairs of elements are coupled in, until a total of twelve elements are coupled during the final portion of the receive mode.

In the course of generating the field F2, five elements are coupled in during the initial portion; subsequently, successive pairs of adjacent elements are coupled in with the closure of each of the switches SW1-SW4, until finally 13 elements are coupled during the final portion of the receive mode.

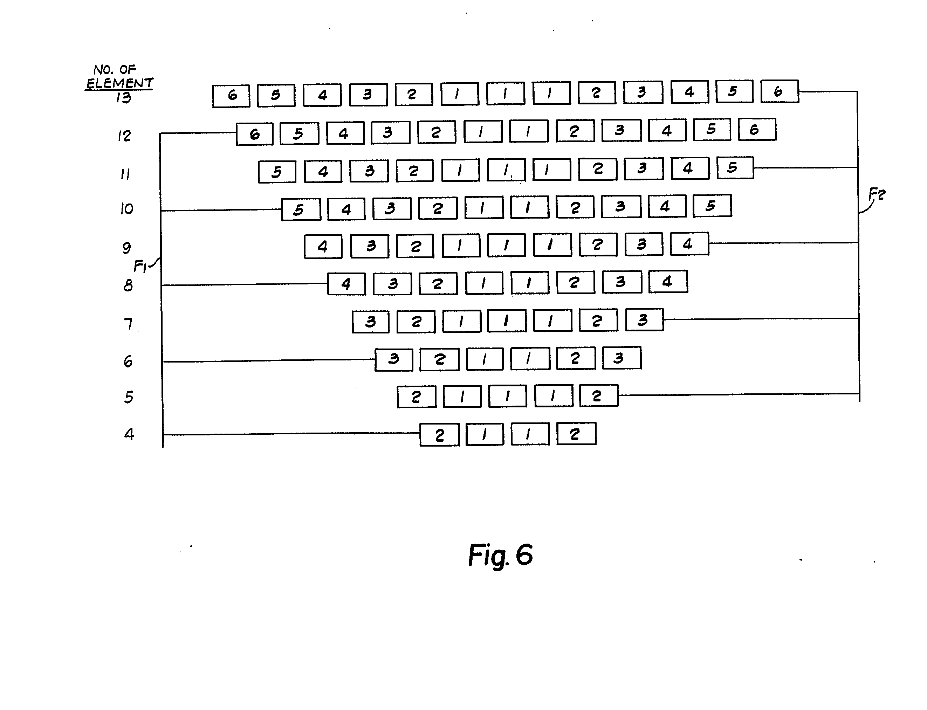

Thus, during the generation of an "even" field F1, even numbers of elements are coupled to the summing amplifier 100 during each of the portions of the receive mode time.  In the "odd" field F2, odd numbers of elements are coupled.  This relationship is illustrated in more detail graphically in FIG. 6.  In FIG. 6, the compositions of the coupled element groups is illustrated along with an illustration of the combination of the individual transducer elements among the various channels.  As can be seen, where four elements are coupled, two adjacent elements are coupled by way of channel 1, and two more immediately outboard elements are coupled by way of channel 2.  This is in connection with the generation of the even field.  In visualizing the second stage of even field generation, one skips to the six element configuration of FIG. 6, illustrating the addition of the pair of elements designated channel 3.  The remainder of the added elements can be easily followed in accordance with this pattern.

In the initial stage of the odd field generation, the

- 16 -

element decoding network 104 combines three central elements into channel 1. During the additional stages of odd field generation, successive pairs of immediately adjacent outboard elements are coupled in by the sequential closure of the switches SW1-SW4, until a total of 13 elements are coupled during the final stage of the reception period.

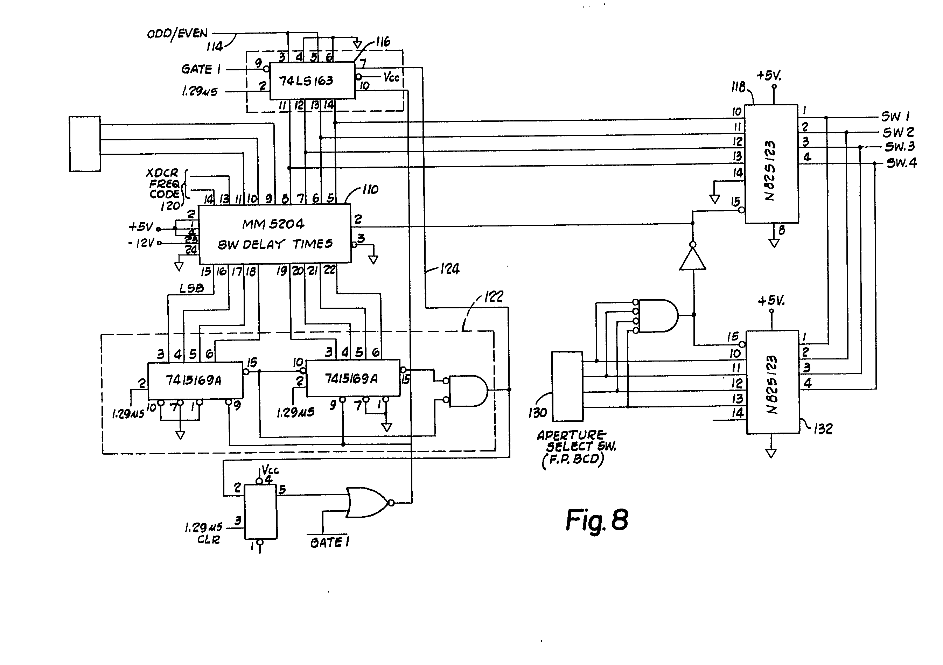

Figure 7 constitutes a tabular display of suitable timing increments for the closure of the switches SW1-SW4. In the lefthand portion of FIG. 7, timing for the generation of the odd field is illustrated. In the lefthand portion of FIG. 7, suitable timing intervals are indicated for three different acoustic frequencies, 2.25, 3.5 and 5.0 MHz. for an element to element spacing of 1.5 mm. The timing given is in microseconds after the occurrence of the "main bang" which is the initiation of the firing of the five central elements in the group of 13 (as described above) to produce the resultant incident ultrasonic burst, the echoes from which are detected during the reception period.

The righthand portion of FIG. 7 gives a suitable timing sequence for each of three ultrasonic frequencies in the generation of an odd interlaced field.

The switches SW1, SW2, SW3, SW4 are each a field effect transistor (FET) switch. In order to prevent switching noise from appearing on the ultrasonic image display, these switches are turned on relatively slowly, i.e., in about 1 microsecond. This is accomplished by controlling the slope of the gate control voltage applied to these switches by means of an RC time constant.

It is also contemplated that, if longer time constants are used for gradually turning on each of the switches SW1-SW4 over longer periods of time, such as approximately 10-35 microseconds, the additional channels can be gradually coupled into the summing amplifier 100. By the use of this technique, the effective or resultant location of the reception pattern transition zone between near and far fields can be gradually transposed, rather than in abrupt steps, to even more accurately follow the recession of outbound incident ultrasonic energy.

As discussed generally above, the even field is generated by detecting 60 ultrasonic pulse-echo "acoustic lines." Following the execution of 60 acoustic lines of the even field, the interlaced odd field is generated by the execution of 60 acoustic lines using the odd numbers of transducer output signals which are combined in the summing amplifier 100.

By the action of the decoding network 104, it can be seen from FIG. 5 that the effective center of the set of listening transducer elements during the reception mode is offset, in the odd field line generations, by one half the center to center distance between adjacent transducer elements, with respect to the centering which obtains in the even fields.

Circuitry comprising the aperture control circuitry 102 is illustrated in schematic form in FIG. 8. In FIG. 8, integrated circuit chips are illustrated, with their appropraite conventional chip numbers and the pin numbers to which the illustrated electrical leads are coupled. The circuitry of FIG. 8 is utilized, as explained in general above, to generate the control timing signals for effecting closure of the switches SW1-SW4.

Referring to FIG. 8, values corresponding to switch delay times, such as those set forth, for example in FIG. 7, are stored in a PROM 110.

During system dead time, between receiving mode periods, the signal appearing at a lead 112, referred to as "gate 1" is at a logic low. If the next acoustic line is to consist of an odd number of combined transducer element signals, the signal at a lead 114 is a logic "zero", and a counter 116 is set to output the number 0. If the next acoustic line is to consist of even numbers of combined transducer elements, the signal at the lead 114 is a logic "1" and the counter 116 is set to output the number "5". This four bit number if used to address a ROM 118, as well as the PROM 110. The ROM 118 outputs the proper drive signals to operate (open or closed) the appropriate ones of the switches SW1-SW4, by way of the leads bearing analogous designation in FIG. 8.

The four bit count output from the counter 116 also, in conjunction with a two bit number whose value represents an ultrasonic transducer frequency and transducer element to element spacing, appearing at the leads 120, addresses the PROM 110. The PROM output

is an eight bit number representing the time delay required until the next of the switches SW1-SW4 is to close. This number is preset into a counter 122.

At the beginning of live time, when the so called "main bang" occurs and the ultrasonic burst is generated, the counter 122 begins counting down. When it counts down to zero, it causes the counter 116 to increment by one count, by way of a lead 124. This operation changes the four bit address signal to the ROM 118, which causes the next of the switches SW1-SW4 to turn on.

This also changes the address input to the PROM 110 which then outputs a new time delay number into the counter circuitry 122. At the beginning of the next acoustic line, counter 122 begins counting.

This sequence continues until all four switches SW1-SW4 have been turned on (closed) and the aperture size is at its maximum, until the next dead time as expressed by the occurrence of the "gate 1" logic low signal.

In addition to the **dynamic aperture control feature** of this invention, a **front panel aperture select switch 130** can be used to select a **fixed aperture size by way of addressing a** PROM 132. When the aperture select switch 130 is at the "all 0" position, dynamic aperture operating mode is selected. When the switch 130 is in any non zero state, at its outputs, a fixed number of transducer elements are used in the aperture throughout each receive mode period. This, of course, is an optional feature.

The major signals illustrated as inputs to the various integrated circuitry components of FIG. 8 are explained as follows: The "gate 1" signal is a main clocking pulse which occurs synchronous with the initiation of each "main bang" i.e., production of incident ultrasonic energy. The "odd/even field" signal is a signal which assumes one logical state during the generation of the 60 lines of the odd fields, and another state during the generation of the 60 acoustic lines constituting the even field. It is simply a counter signal from the system control circuit which counts 60 acoustic lines for each of the odd and even fields, and controls the aperture control circuitry to operate the element decoding circuitry 104 in the manner described above. The "1.27 micro
second clock" signal is self explanatory, and is a "fine" clock
synchronous with the clocking signal which appears at "gate 1".
The "XDCR FREQ" signal adjusts the timing of the aperture size
take place according to a timing sequence which is appropriate
for the particular frequency of the incident ultrasonic energy.
This is a square root function, and its application in the specific
circuitry is shown in FIG. 8. Its effect is evident by inspection
of the switch closure times set forth in the table of FIG. 7 for
various acoustic frequencies.

- 20 -

CLAIMS

1.  An ultrasonic examination method, characterized by the steps of: directing an incident burst of ultrasonic energy into a subject, employing a variable aperture ultrasonic transducer unit for receiving ultrasonic echoes caused by the incident burst; adjusting the variable aperture of the transducer unit to maintain the transition zone between the near and far fields of the reception pattern of the transducer unit substantially coincident with the recession of incident ultrasonic energy into the subject, and employing received ultrasonic echoes for producing a visual representation of internal subject structure.

2.  The method of claim 1, characterized by the steps of: actuating a sequence of linearly disposed ultrasonic transducer elements in a transmit mode for firing incident bursts of ultrasonic energy into the subject from different locations; causing groups of the transducer elements to receive, in a receive mode, echoes produced by corresponding incident bursts, each element group defining a particular reception pattern having a near field and a far field intersecting at the transition zone which has maximum reception resolution, the location of said transition zone being a function of the cumulative longitudinal dimension of the transducer element receiving group; and varying the longitudinal dimension of each receiving group of transducer elements during its operation in said receive mode for causing the transition region of the reception pattern to approximately track the recession of the corresponding incident ultrasonic burst into the subject.

3.  The method of claim 3, characterized in that said varying step comprises: expanding the longitudinal dimension of each receiving transducer element group during the recession of said corresponding incident burst by successively adding adjacent transducer elements to said receiving group during its operation in the receive mode.

4.  The method of claim 3, characterized in that said varying step further comprises: adding said adjacent transducer elements to said receiving group at a rate which approximately maintains the effective length of said receiving group of transducer elements at a value represented by the expression $2\sqrt{XL}$, where L is the wavelength of the ultrasonic energy in the subject and X is the instantaneous distance of a wavefront of the corresponding receding incident burst from the transducer array.

5.   The method of claim 1, characterized by the steps of:
firing the incident ultrasonic energy burst into the subject from
a multi-element transducer array applying elements of the trans-
ducer array to receive ultrasonic echoes from the incident burst
in a receive mode, the transducer elements defining a reception
pattern having a near field and a far field defining the transition
zone whose location is a function of the number of transducer elements applied for receiving; and during the receive mode, varying
the number of transducer elements applied for receiving echoes for
causing the transition zone to recede into the subject at an overall rate approximately equal to the acoustic velocity of the ultrasonic energy in the subject.

6.   An ultrasonic examination system, characterized by:
a variable aperture ultrasonic transducer unit for directing an
incident burst of ultrasonic energy into a subject and detecting
ultrasonic echoes caused by the incident burst; circuitry for adjusting the variable aperture of the transducer unit during reception of ultrasonic echoes to maintain the transition zone between
the near and far fields of the reception pattern of the transducer
unit substantially coincident with the recession of incident ultrasonic energy into the subject, and imaging display means for employing received ultrasonic echoes for producing a visual representation of internal subject structure.

7.   The system of claim 6, characterized in that the
adjusting circuitry comprises at least one field effect transistor
switch and circuitry for providing a variable control voltage to
said field effect transistor, for incremental adjustments of the
variable aperture of the transducer unit gradually over a time at
least one microsecond.

8.   The system of claim 6, characterized in that the trans-
ducer unit comprises a linear array of ultrasonic transducer elements
pulser circuitry connected for actuating, in a transmit mode, a
sequence of the transducer elements for firing resultant incident
bursts of ultrasonic energy transverse from the linear array into
the subject from different locations along the linear transducer array, control circuitry for causing groups of adjacent linearly disposed transducer elements to receive, in a receive mode, the echoes produced by corresponding incident bursts, each element group defining a reception pattern having a near field and a far field which intersect at a transition zone having a maximum receiving resolution and whose location is a function of the cumulative longitudinal dimension of the transducer elements constituting the receiving group, said display means including display apparatus and imaging circuitry coupled to the transducer array and responsive to received ultrasonic echoes for producing the visual representation of internal structure of the subject, and the adjusting circuitry comprising dynamic aperture circuitry associated with the control circuitry for varying the longitudinal dimension of each receiving group of transducer elements during its operation in said receive mode for causing the transition region to substantially track recession of the corresponding incident ultrasonic burst into the subject.

9. The system of claim 8, characterized in that said dynamic aperture circuitry comprises circuitry for expanding the longitudinal dimension of each receiving transducer element group during recession of said corresponding incident burst by successively adding adjacent transducer elements to said receiving group during its operation in the receive mode.

10. The system of claim 9, characterized in that said dynamic aperture circuitry further comprises circuitry for adding said adjacent transducer elements to said receiving group at a rate which approximately maintains the effective length of said receiving group of transducer elements at a value represented by the expression $2\sqrt{XL}$, where L is the wavelength of the ultrasonic energy in the subject and X is the instantnaeous distance of a wavefront of the corresponding receding incident burst from the transducer array.

11. The system of claim 6, characterized in that comprising; pulser circuitry is coupled to a multi-element transducer array for firing the incident ultrasonic burst into the subject from the transducer array in a transmit mode, circuitry for applying elements of the transducer array to receive ultrasonic echoes from the incident burst in a receive mode, the transducer elements defining the receiving pattern whose transition zone location is a function of the number of transducer elements applied for receiving; and dynamic aperture control circuitry for varying, during the receive mode, the number of transducer elements applied for receiving echoes for causing said transition zone to recede into the subject at approximately the acoustic velocity of the ultrasonic energy in the subject.

12. The system of claim 11, characterized in that said dynamic aperture control circuitry further comprises: circuitry for varying the number of applied receiving transducer elements during the receive mode at a rate and timing for causing said transition zone to recede into the subject substantially coincident with a wavefront of said incident burst.

0012165

Fig. 1

Fig. 2

Fig. 3

0012165

Fig. 4

| SWITCH | ODD NUMBER OF ELEMENTS | | | | EVEN NUMBER OF ELEMENTS | | | |
|---|---|---|---|---|---|---|---|---|
| | # OF ELEMENTS | TIME FROM MAIN BANG (μS) TRANSDUCER | | | # OF ELEMENT | TIME FROM MAIN BANG (μS) TRANSDUCER | | |
| | | 2.25 MHz | 3.5 MHz | 5.0 MHz | | 2.25 MHz | 3.5 MHz | 5.0 MHz |
| 1 | 7 | 21.3 | 32.9 | 46.6 | 6 | 11.96 | 18.5 | 26.2 |
| 2 | 9 | 48.0 | 74.1 | 105 | 8 | 33.3 | 51.5 | 73.0 |
| 3 | 11 | 85.8 | 132.6 | 188.5 | 10 | 65.0 | 100. | 141 |
| 4 | 13 | 132.6 | 204 | 289.9 | 12 | 107.9 | 166.4 | 236 |

Fig. 7

Fig. 5

NO. OF ELEMENT

13 | 6 | 5 | 4 | 3 | 2 | 1 | 1 | 1 | 2 | 3 | 4 | 5 | 6 |

12 | 6 | 5 | 4 | 3 | 2 | 1 | 1 | 2 | 3 | 4 | 5 | 6 |

11 | 5 | 4 | 3 | 2 | 1 | 1 | 1 | 2 | 3 | 4 | 5 |

10 | 5 | 4 | 3 | 2 | 1 | 1 | 2 | 3 | 4 | 5 |

9 | 4 | 3 | 2 | 1 | 1 | 1 | 2 | 3 | 4 |

8 | 4 | 3 | 2 | 1 | 1 | 2 | 3 | 4 |

7 | 3 | 2 | 1 | 1 | 1 | 2 | 3 |

6 | 3 | 2 | 1 | 1 | 2 | 3 |

5 | 2 | 1 | 1 | 1 | 2 |

4 | 2 | 1 | 1 | 2 |

F1  F2

4 / 5

Fig. 6

Fig. 8

0012165

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | A 61 B 10/00 |
| X | <u>DE - A1 - 2 713 087</u> (VARIAN ASS.)<br>+ Pages 5-7, 11-21; figures 2-11 + | 1-3,5,<br>6,8,9,<br>11,12 | G 01 N 29/00<br>G 01 S 15/02 |
| P | & US-A-4 161 121 (17-07-1979)<br>-- | | |
| X | <u>DE - B2 - 2 643 918</u> (SIEMENS AG)<br>+ Totality +<br>-- | 1-3,5,<br>6,8,9,<br>11,12 | |
| | <u>DE - A1 - 2 709 925</u> (KRETZTECHNIK GMBH)<br>+ Totality +<br>-- | 1,6 | **TECHNICAL FIELDS SEARCHED (Int.Cl.)**<br><br>A 61 B 10/00<br>G 01 N 29/00<br>G 01 S 15/00 |
| A | <u>US - A - 4 012 952</u> (REALIZATION ULTR.)<br>+ Totality +<br>-- | 1,6 | |
| A | <u>US - A - 3 911 730</u> (KRAUTKRAMER)<br>+ Totality +<br>-- | | |
| P | <u>DE - A1 - 2 855 888</u> (GENERAL EL.)<br>(28-06-1979)<br>+ Pages 16-22; fig. 2-4 + | 1-3,5,<br>6,8,9,<br>11,12 | **CATEGORY OF CITED DOCUMENTS** |
| P<br>P<br>P | & FR-A-2 413 669 (27-07-1979)<br>& GB-A-2 011 075 (04-07-1979)<br>& NL-A-7 812 494 (29-06-1979)<br>---- | | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| VIENNA | 24-03-1980 | LUDWIG |

EPO Form 1503.1  06.78